Europäisches Patentamt

European Patent Office

Office européen des brevets

(11) Veröffentlichungsnummer: **0 356 535 B1**

# EUROPÄISCHE PATENTSCHRIFT

(45) Veröffentlichungstag der Patentschrift: 27.10.93

(51) Int. Cl.5: **B30B 11/24**, F16H 1/22

(21) Anmeldenummer: 88113713.7

(22) Anmeldetag: 23.08.88

(54) **Zahnradgetriebe.**

(43) Veröffentlichungstag der Anmeldung:
07.03.90 Patentblatt 90/10

(45) Bekanntmachung des Hinweises auf die
Patenterteilung:
27.10.93 Patentblatt 93/43

(84) Benannte Vertragsstaaten:
AT BE DE ES FR GB IT

(56) Entgegenhaltungen:
DE-A- 2 130 599
DE-A- 2 515 876
DE-A- 2 541 631
DE-C- 3 009 397

(73) Patentinhaber: **Werner & Pfleiderer GmbH**
**Theodorstrasse 10**
**D-70469 Stuttgart(DE)**

(72) Erfinder: **Manecke, Reinhard**
**Eisvogelweg 8**
**D-7000 Stuttgart 50(DE)**

## Beschreibung

Die Erfindung betrifft ein Zahnradgetriebe mit den Merkmalen des Oberbegriffes des Anspruchs 1 (DE-A- 25 15 876).

Zahnradgetriebe dieser Art dienen zum Übertragen hoher Drehmomente, weil sie eine Drehmomentaufteilung auf je zwei im Eingriff befindliche Zahnpaare des Abtriebsrades ermöglichen. Dies erhöht die Lebensdauer der Zähne bzw. gestattet die Übertragung hoher Drehmomente bei kleinen Zahnabmessungen. Solche Zahnradgetriebe werden beispielsweise zum Antrieb der Schneckenwellen von Doppelschneckenextrudern mit Vorteil eingesetzt.

Das bekannte Zahnradgetriebe der im Oberbegriff des Anspruchs 1 angegebenen Art (DE-A- 25 15 876) weist zwei antriebsseitige und zwei abtriebsseitige, gleich große Zwischenräder auf, die in einem im Getriebehäuse beweglichen Rahmen gelagert sind. Die Mitten des Antriebsrades und der antriebsseitigen Zwischenräder einerseits und die Mitten des Abtriebsrades und der abtriebsseitigen Zwischenräder andererseits liegen jeweils auf einer gemeinsamen Geraden. Da das Antriebsrad und das Abtriebsrad im Getriebegehäuse fest gelagert sind, ergeben sich Reaktionskräfte, die zu erheblichen Restdrehmomenten führen.

Bei einem weiteren bekannten Zahnradgetriebe (DE-C- 30 09 397) ist der die Zwischenräder tragende bewegliche Rahmen schwenkbar im Getriebehäuse gelagert, um einen Lastausgleich, d.h. die gleichmäßige Verteilung des Drehmoments auf die Zahneingriffe zu erzielen.

Da das Antriebsrad beweglich im Getriebehäuse gelagert ist, kann dieses aus der die Mitten der Zahnräder verbindenden Geraden auswandern und belastet die Bogenzahnkupplung.

Wenn der Rahmen des bekannten Zahnradgetriebes aufgrund der Lagerreaktionskräfte der insgesamt vier Zwischenräder schwenkt, heben sich die durch die Lagerkräfte erzeugten Drehmomente um die Mitte des Antriebsrades nicht auf, vielmehr verbleibt ein nicht unbeträchtliches Restdrehmoment, das einen Lastausgleich verhindert.

Der Erfindung liegt die Aufgabe zugrunde, ein Zahnradgetriebe der im Oberbegriff des Anspruches 1 angegebenen Art mit einfachem Aufbau zu schaffen, bei dem im Betrieb ein nahezu vollständiger Lastausgleich erreicht ist, d.h. eine nahezu vollständige Freiheit von Restdrehmomenten.

Zur Lösung dieser Aufgabe dienen die Merkmale des Patentanspruchs.

Nach der Erfindung, sind das Antriebsrad und das Abtriebsrad jeweils gegenüber einer die Mittelpunkte der mit ihm kämmenden Zwischenräder verbindenden Geraden derart verschoben im Getriebehäuse gelagert, daß die Reaktionskräfte in den Lagern den beiden nicht miteinander kämmenden Zwischenräder jeweils in gleiche Wirkungslinien fallen. Hierdurch wird erreicht, daß die nach Erkenntnis des Erfinders jeweils gleich großen Lagerreaktionskräfte, welche entgegengerichtet auf die paarweise "diagonal" gegenüberliegenden, nicht miteinander kämmenden Zwischenräder wirken, kein Drehmoment um den Mittelpunkt des ortsfest gelagerten Antriebsrades erzeugen können.

Die Erfindung ist im folgenden anhand schematischer Zeichnungen im beispielsweisen Vergleich zum Stand der Technik anhand eines Ausführungsbeispieles mit weiteren Einzelheiten näher erläutert. Es zeigen:

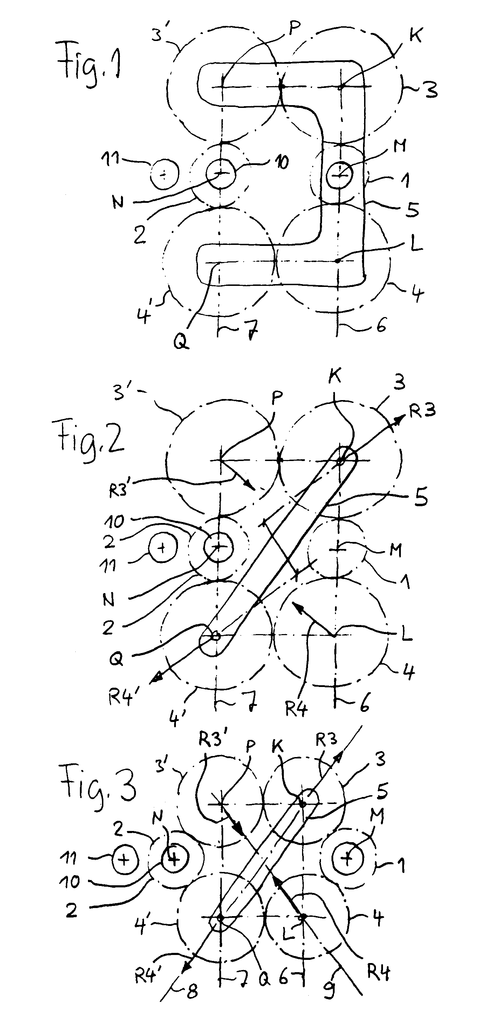

Fig. 1 und Fig. 2
jeweils ein Getriebeschema von Zahnradgetrieben mit fest im Getriebehäuse gelagerten Antriebsrad
Fig. 3
ein Getriebeschema einer Ausführung eines Getriebes nach der Erfindung und
Fig. 4
das Getriebeschema nach Fig. 3 in größerem Maßstab zur Erläuterung der Anordnung von Antriebsrad und Abtriebsrad.

In den Figuren sind gleiche oder funktionsgleiche Teile der Einfachheit halber mit gleichen Bezugszeichen belegt.

Das bekannte Zahnradgetriebe nach Fig. 1 weist ein Antriebsrad 1, ein Abtriebsrad 2 und zwei antriebsseitige Zwischenräder 3,4 auf, deren Mittelpunkt K.L und M in einer gemeinsamen Geraden 6 liegen.

Mit den antriebsseitigen Zwischenrädern 3,4 kämmen jeweils abtriebsseitige Zwischenräder 3',4', welche ihrerseits an diagonal gegenüberliegenden Stellen mit einem Abtriebsrad 2 kämmen. Das Abtriebsrad 2 ist koaxial mit einer der beiden Schneckenwellen 10, 11 eines Doppelschneckenextruders angeordnet, wobei die zweite Welle 11 über einen nicht dargestellten, weiteren Getriebezug des Zahnradgetriebes angetrieben werden kann. Der Mittelpunkt N des Abtriebsrades 2 liegt auf einer gemeinsamen Geraden 7 durch die Mittelpunkte P,Q der beiden abtriebsseitigen Zwischenräder 3', 4'. Alle Zwischenräder 3,4,3',4' sind in einem gemeinsamen Rahmen 5 gelagert, der um den Mittelpunkt M schwenkbar im nicht gezeigten Getriebegehäuse gelagert ist. Das Antriebsrad 1 selbst ist begrenzt radial zum Mittelpunkt M beweglich über eine Bogenzahnkupplung im Getriebegehäuse gelagert. Aufgrund dieser Maßnahme ist ein Lastausgleich angestrebt. Wenn der Rahmen 5 jedoch aufgrund der Lagerreaktionskräfte der vier Zwischenräder um den Punkt M schwenkt, heben sich die um den Mittelpunkt M wirkenden Drehmomente nicht auf, so daß der angestrebte Lastausgleich nicht zustandekommt.

Bei der in Fig. 2 gezeigten Ausführung verbindet ein im nicht gezeigten Getriebegehäuse frei beweglicher Rahmen 5 das antriebsseitige Zwischenrad 3 mit dem abtriebsseitigen Zwischenrad 4'. Die Räder 3, 4' sind also mit dem Rahmen 5 beweglich im Gehäusegetriebe gelagert, während alle Übrigen Räder, d.h. auch das Antriebsrad 1, im Getriebegehäuse fest gelagert sind. Der Rahmen 5 ermöglicht eine freie Einstellung der beiden Zwischenräder 3,4' zur Erzielung eines weitgehenden Lastausgleiches. Wie jedoch die Darstellung der Lagerreaktionskräfte R3, R4' und in gleicher Weise auch der Lagerreaktionskräfte R4,R3' bei den fest im Getriebegehäuse gelagerten Zwischenrädern 4,3' zeigt, führen die paarweise entgegengesetzten Reaktionskräfte R3, R4' und R3', R4 zu einem Restdrehmoment um den Mittelpunkt M des Antriebsrades 1.

Dieses Restdrehmoment, das erheblich kleiner ist als dasjenige bei dem Zahnradgetriebe nach Fig. 1, ist bei der Ausführung nach Fig. 3 vollständig ausgeschaltet. Dies ist dadurch erreicht, daß sowohl das Antriebsrad 1 als auch das Abtriebsrad 2 aus den Geraden 6, 7 jeweils nach außen um eine derartige Verlagerung s herausgerückt sind, daß die paarweise einander entgegengerichteten Lagerreaktionskräfte R3,R4' und R3',R4 gerade in gemeinsame Wirkungslinien 8, 9 fallen. Hierdurch wird das Entstehen jeglichen Restdrehmoments und der Lagerreaktionskräfte um den Punkt N von vorneherein ausgeschaltet.

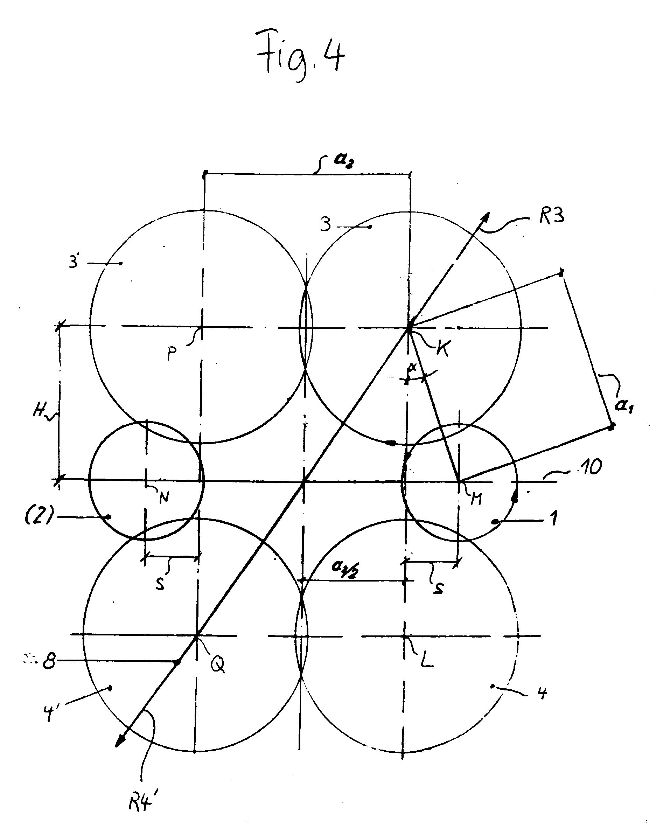

Die Verlagerung s ergibt sich gemäß Fig. 4 aus der Gleichung

$$s = H \times \tan \alpha,$$

worin H der Abstand der Mittelpunkte K,P bzw. L,Q von einer die Mittelpunkte M,N verbindenden Geraden 10 (Fig. 4) und $\alpha$ der Winkel zwischen dem Achsabstand $a_1$ der Räder 3 und 1 und dem Lot auf die Gerade 10 vom Mittelpunkt K aus ist.

Der Winkeln $\alpha$ ergibt sich unter der Voraussetzung, daß die Eingriffswinkel zwischen den Zahnrädern 1,3 einerseits und 3,3' andererseits gleich und bekannt (aus der Zahnberechnung) sind, aus der Gleichung

$$\tan(45° - \alpha/2) = \frac{a_2/2}{H},$$

worin $a_2$ der Achsabstand der kämmenden Zwischenräder 3,3' bzw. 4,4' ist.

## Patentansprüche

1. Zahnradgetriebe mit einem Antriebsrad (1), zwei damit kämmenden antriebsseitigen Zwischenrädern (3,4), die je mit einem abtriebsseitigen Zwischenrad (3',4') kämmen, welches seinerseits mit einem Abtriebsrad (2) kämmt, wobei ein antriebsseitiges Zwischenrad (3 oder 4) und das damit nicht kämmende abtriebsseitige Zwischenrad (3' oder 4') in dem frei im Getriebehäuse beweglichen Rahmen (5) gelagert sind, während alle übrigen Räder fest im Getriebehäuse gelagert sind, dadurch gekennzeichnet, daß das Antriebsrad (1) und das Abtriebsrad (2) jeweils gegenüber einer die Mittelpunkte der mit ihm kämmenden Zwischenräder (3,4 bzw. 3',4') verbindenden Geraden (6,7,) derart um eine Strecke (s) verschoben im Getriebehäuse gelagert sind, daß die Reaktionskräfte (R3,R4' bzw. R3',R4) in den Lagern der beiden nicht miteinander kämmenden Zwischenräder (3,4' bzw. 3',4) jeweils in gleiche Wirkungslinien (8,9) fallen.

## Claims

1. Toothed wheel gear with a drive input wheel (1), two drive input side intermediate wheels (3, 4) meshing therewith and each meshing with a respective drive output side intermediate wheel (3', 4'), which in its turn meshes with a drive output wheel (2), wherein one drive input side intermediate wheel (3 or 4) and the drive output side intermediate wheel (3' or 4') not meshing therewith are borne in the frame (5) which is freely movable in the gear housing whilst all remaining wheels are fixedly borne in the gear housing, characterised thereby, that the drive input wheel (1) and the drive output wheel (2) are each borne in the gear housing displaced through a distance (s) in such a manner relative to a straight line (6, 7) connecting the centres of the intermediate wheels (3, 4 or 3', 4') meshing therewith that the reaction forces (R3, R4' or R3', R4) in the bearings of both the intermediate wheels (3, 4' or 3', 4) not meshing one with the other each fall into like lines of action (8, 9).

## Revendications

1. Transmission par engrenages comprenant une roue menante (1) et deux roues intermédiaires (3, 4) qui sont situées côtê entraînement, engrènent dans la roue précitée et engrènent dans une roue intermédiaire respective (3', 4') située côté sortie et engrenant, à son tour, dans une roue menée (2), transmission dans laquelle une roue intermédiaire (3 ou 4) située côté entraînement et la roue intermédiaire (3' ou 4') qui est située côté sortie, et n'engrène pas dans cette roue, sont montées dans le cadre (5) mobile librement dans le carter de transmission, tandis que toutes les autres roues sont montées à axe fixe dans le carter de transmission, caractérisée par le fait que la roue menante (1) et la roue menée (2) sont montées dans le carter de transmission avec décalage respectif, par rapport à une ligne droite (6, 7) reliant les centres des roues intermédiaires (3, 4, respectivement 3', 4') engrenant dans les roues précitées, d'une distance (s) telle que les forces de réaction (R3, R4', respectivement R3', R4) passent, dans les paliers des deux roues intermédiaires (3, 4', respectivement 3', 4) n'engrenant pas mutuellement, selon des lignes d'action (8, 9) respectivement identiques.

EP 0 356 535 B1

Fig.1

Fig.2

Fig.3

5

Fig. 4